# EUROPÄISCHE PATENTSCHRIFT

(11) **EP 0 552 436 B1**
(45) Veröffentlichungstag und Bekanntmachung des Hinweises auf die Patenterteilung: **17.01.1996**
(21) Anmeldenummer: 92119664.8
(22) Anmeldetag: 19.11.1992
(51) Int. Cl.: B60B 1/00

(54) **Felge für ein Kraftfahrzeug**
Rim for motorvehicle
Jante pour véhicule à moteur

(30) Priorität: 24.01.1992 DE 4201838
(43) Veröffentlichungstag der Anmeldung: 28.07.1993
(73) Patentinhaber: Dr.Ing.h.c. F. Porsche Aktiengesellschaft, D-70435 Stuttgart (DE)
(72) Erfinder: Stach, Jens, W-7148 Eberdingen (DE)

(56) Entgegenhaltungen:
- FR-A- 447 695
- GB-A- M29 460

## Beschreibung

Die Erfindung bezieht sich auf eine Felge für ein Kraftfahrzeug mit einer mehrere radiale Hohlspiechen umfassenden Radschüssel, die in einem-Kokillenwerkzeug hergestellt wird und mit einem Felgenbett verbunden ist, wobei eine gegossene Radschüssel mit einem aus einem umgeformten Teil bestehenden Felgenbett über eine Reibschweißung im Bereich eines Felgenhornes verbunden wird und die Radschüssel an einer Innenseite mindestens eine als Kreisring umlaufende ebene Schweißfläche aufweist, die korrespondierend zu einer weiteren gegenüberstehenden ebenen Schweißfläche des Felgenbettes angeordnet ist.

Nach der nicht vorveröffentlichten Patentanmeldung gemäß Art. 54 (3) EPÜ, EP 92117150.0, besteht die Radfelge aus zwei getrennten Bauelementen, wie eine Felgenschüssel und ein Felgenbett, die miteinander durch eine Reibschweißung verbunden werden. Die Felgenschüssel umfaßt Hohlspeichen, welche sich durchgehend bis zur Nabe erstrecken und am Felgenrand in eine Öffnung auslaufen.

Aufgabe der Erfindung ist es, eine Felge zu schaffen, deren mit einer relativ geringen Wandstärke ausgebildeten Hohlrippen mit einer großen Festigkeit ausgebildet sind.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsachlich erzielten Vorteile bestehen darin, daß die Hohlrippen bei einer relativ dünnen Wandstärke über eine innenliegende Rippe verstärkt werden. Diese Verstärkungsrippe erstreckt sich radial von der Radnabe etwa bis zum Felgenbett hin und verbindet eine Außenwand mit einer Innenwand des Hohlraumes in der Verstärkungsrippe. Sie ist in Hochrichtung in einer senkrechten, durch die Raddrehachse verlaufenden Ebene ausgerichtet und unterteilt den rechteckförmigen Hohlraum in zwei etwa gleich große Kammern. Dieser Hohlraum weist seine größte Breite zwischen zwei Öffnungen der Felge auf.

Ein Ausführungsbeispiel der Erfindung ist in der Zeichnung dargestellt und wird im folgenden näher beschrieben.

Es zeigen
Fig. 1 eine Vorderansicht einer teilweise dargestellten Felge und
Fig. 2 einen Schnitt nach der Linie II-II der Fig. 1.

Die Felge 1 besteht im wesentlichen aus zwei Bauteilen, einer Felgenschüssel 2 und einem Felgenbett. Diese beiden Teile werden in verschiedenen Verfahren hergestellt und miteinander beispielsweise über eine Reibschweißung verbunden. Die Felgenschüssel 2 besteht aus einer Aluminiumlegierung und wird im Druckguß in einem Kokillenwerkzeug hergestellt und das Felgenbett wird entweder aus einem gegossenen Rohling, durch Warmumformung auf einer Rollendruckmaschine hergestellt oder es kann auch aus einem stranggepreßten Rohrstück gefertigt werden. Die Felgenschüssel 2 wird in einem Kokillenwerkzeug, das aus einem Unterkern und einem Oberkern besteht, gegossen.

Die in der Felgenschüssel 2 zwischen jeweils zwei Luftöffnungen 3 und 4 angeordneten radialen Hohlspeichen 5 weisen einen Hohlraum 6 mit rechteckförmigem Querschnitt mit einer mittigen Verstärkungsrippe 7 auf. Dieser Hohlraum 6 erstreckt sich mit einer größeren Abmessung (Breite b) in der Ebene Y-Y der Felgenschüssel 2, wobei die kleinere Abmessung (Höhe a) quer zu dieser Ebene der Felgenschüssel 2 angeordnet ist.

Die Verstärkungsrippe 7 unterteilt den Hohlraum 6 in zwei gleiche Hohlräume 8 und 9, in der Weise, daß die Rippe 7 mit einer Außenwandung 10 und einer Innenwandung 11 verbunden ist. Insbesondere erstreckt sich die Rippe 7 mit ihrer Höhe h in einer senkrechten, durch die Raddrehachse 12 verlaufenden Ebene X-X. Die Dicke d der Verstärkungsrippe 7 entspricht in etwa der Außenwanddicke d1.

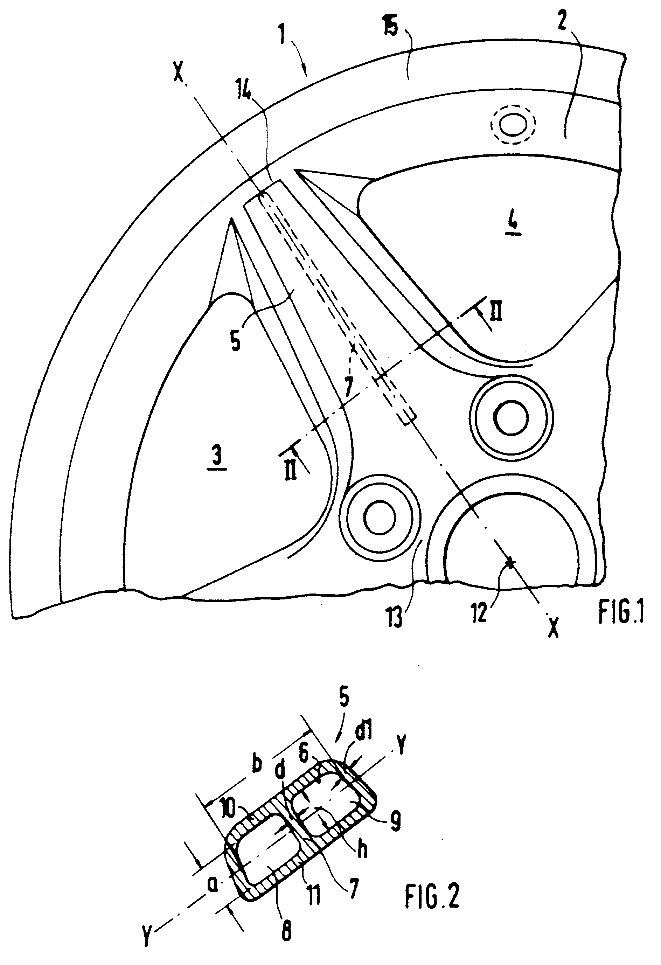

Die Länge der Verstärkungsrippe 7 ist entsprechend der aufzunehmenden Belastung ausgeführt. Im gezeigten Beispiel gemäß Fig. 1 verläuft die Rippe 7 von der Nabe 13 bis zu einer Austrittsöffnung 14 am Rand 15 der Felgenschüssel 2.

## Patentansprüche

1. Felge für ein Kraftfahrzeug mit einer mehrere radiale Hohlspeichen umfassenden Radschüssel (2), die in einem Kokillenwerkzeug hergestellt wird und mit einem Felgenbett verbunden ist, wobei die Radschüssel (2) mit einem aus einem umgeformten Teil bestehenden Felgenbett über eine Reibschweißung im Bereich eines Felgenhornes verbunden ist und die Radschüssel (2) an einer Innenseite mindestens eine als Kreisring umlaufende ebene Schweißfläche aufweist, die korrespondierend zu einer weiteren gegenüberstehenden ebenen Schweißfläche des Felgenbettes angeordnet ist und im Hohlraum (6) der Speiche (5) jeweils eine sich radial etwa von der Radmittenachse (12) nach außen erstreckende Verstärkungsrippe (7) angeordnet ist, die zwei gegenüberliegende Wandungen (10 und 11) des Hohlraumes (6) miteinander verbindet.

2. Felge nach Anspruch 1, dadurch gekennzeichnet, daß der Hohlraum (6) im Querschnitt etwa rechteckförmig ausgebildet ist und die Breite (b) in der Felgenebene (Y-Y) des Raumes (6) größer ist als dessen Tiefe (a).

3. Felge nach den Ansprüchen 1 oder 2, dadurch gekennzeichnet, daß die außenliegende Wandung (10) der Speiche (5) mit der innenliegenden Wandung (11) über die Verstärkungsrippe (7) miteinander verbunden sind.

4. Felge nach den Ansprüchen 1, 2 oder 3, dadurch gekennzeichnet, daß die Rippe (7) sich über die gesamte Länge der Hohlspeiche (5) erstreckt.

## Claims

1. A wheel rim for a motor vehicle with a wheel dish (2) comprising a plurality of radial hollow spokes and produced in an ingot mould tool and connected to a rim base, wherein the wheel dish (2) is connected to a rim base comprising a deformed part by way of a friction weld in the region of a rim projection, and the wheel dish (2) is provided on an inside with at least one flat welding surface extending continuously as a circular ring and arranged so as to correspond to a further opposite flat welding surface of the rim base, and a respective reinforcement rib (7) extending radially outwards from the median axis (12) of the wheel is arranged in the cavity (6) of the spoke (5) and connects the two opposite walls (10 and 11) of the cavity (6) to each other.

2. A wheel rim according to Claim 1, **characterized in that** the cavity (6) is substantially rectangular in cross-section, and the width (**b**) in the rim plane (**Y-Y**) of the cavity (6) is greater than the depth (**a**) thereof.

3. A wheel rim according to Claim 1 or 2, **characterized in that** the outer wall (10) of the spoke (5) [and] the inner wall (11) are connected to each other by way of the reinforcement rib (7).

4. A wheel rim according to Claims 1, 2 or 3, **characterized in that** the rib (7) extends over the entire length of the hollow spoke (5).

## Revendications

1. Jante pour un véhicule automobile comportant une cuvette de roue (2) comprenant plusieurs rayons creux radiaux, qui est fabriquée dans un outil de lingotière et qui est reliée à une base de jante, dans laquelle la cuvette de roue (2) avec une base de jante constituée d'un élément reformé, est assemblée par une soudure par friction, dans la région d'une corne de jante et la cuvette de roue (2) présente sur une face intérieure au mains une surface soudée plane s'étendant sur le pourtour en anneau de cercle, qui est en correspondance avec une autre surface soudée plane en vis-à-vis de la base de jante et dans la cavité (6) du rayon (5) est prévu chaque fois une nervure de renfort (7) s'étendant radialement depuis l'axe médian (12) de la roue vers l'extérieur, laquelle nervure de renfort relie entre elles deux parois (10 et 11) se faisant face de la cavité (6).

2. Jante selon la revendication 1, caractérisée en ce que la cavité (6) est de section transversale à peu près rectangulaire et la largeur (b) dans le plan de jante (Y-Y) de la cavité (6) est supérieure à sa profondeur (a).

3. Jante sel on les revendications 1 ou 2, caractérisée en ce que la paroi extérieure (10) du rayon (5) et la paroi intérieure (11) sont reliées entre elles par la nervure de renfort (7).

4. Jante selon les revendications 1, 2 ou 3, caractérisée en ce que la nervure (7) s'étend sur toute la longueur du rayon creux (5).
